# FASCICULE DE BREVET EUROPEEN

(11) **EP 0 351 287 B1**
(45) Date de publication et mention de la délivrance du brevet: **15.09.1993**
(21) Numéro de dépôt: 89401928.0
(22) Date de dépôt: 05.07.1989
(51) Int. Cl.: C04B 35/58, C04B 37/02, C04B 41/51, B22F 7/06

(54) **Elément de coupe composite contenant du nitrure de bore cubique et procédé de fabrication d'un tel élément**
Verbundschneidelement, das kubisches Bornitrid enthält und Verfahren zu seiner Herstellung
Composite cutting element comprising cubic boron nitride and its manufacturing process

(30) Priorité: 07.07.1988 FR 8809239
(43) Date de publication de la demande: 17.01.1990
(73) Titulaire: SUPRADIAMANT Société anonyme de droit français, F-38113 Veurey-Voroize (FR)
(72) Inventeur: Cerceau, Jean-Michel, F-38170 Seyssinet (FR); Boyat, Yves, F-38140 Rives S/Fure (FR)
(74) Mandataire: Fort, Jacques

(56) Documents cités:
- EP-A- 0 180 243
- EP-A- 0 181 258
- FR-A- 1 586 085
- PATENT ABSTRACTS OF JAPAN, vol. 10, no. 189 (M-494), 3 juillet 1986; & JP-A-61 034 108 (DAIJIETSUTO KOGYO K.K.) 18-02-1986
- PATENT ABSTRACTS OF JAPAN, vol. 10, no. 142 (M-481), 24 mai 1986, page 55 M 481; & JP-A-60 263 602 (SUMITOMO DENKI KOGYO K.K.) 27-12-1985
- PATENT ABSTRACTS OF JAPAN, vol. 10, no. 331 (M-533)[2387], 11 novembre 1986, page 162 M 533; & JP-A-61 136 605 (KEIICHIRO SHOJI) 24-06-1986
- PATENT ABSTRACTS OF JAPAN, vol. 10, no. 142 (M-481), 24 mai 1986; & JP-A-60 263 601 (SUMITOMO DENKI KOGYO K.K.) 27-12-1985
- PATENT ABSTRACTS OF JAPAN, vol. 12, no. 11 (C-468), 13 janvier 1988; & JP-A-62 164 869 (NISSIN ELECTRIC CO. LTD) 21-07-1987

## Description

L' invention concerne les éléments de coupe plats, utilisables notamment pour constituer la pointe de forets, de nature composite, comprenant une lame abrasive centrale ayant une teneur supérieure à 80 % en volume en matériau ultra-dur prise en sandwich entre deux couches latérales de support.

On connaît déjà des éléments de coupe du type ci-dessus, dont le matériau ultra-dur est constitué par un compact de diamant polycristallin, le terme "compact" désignant un produit fritté constitué par des grains liés entre eux par des ponts, créés par diffusion de matière à l'état plastique. Le document EP-A-0 180 243 décrit par exemple un élément de coupe composite ayant une lame centrale en compact diamanté reliée à des couches de support en carbure métallique par l'intermédiaire de couches intermédiaires constituées d'un matériau dont le coefficient de dilatation thermique assure la transition entre support et lame et qui empêche la diffusion du liant catalyseur entre carbure et diamant lors de la fabrication de l'élément par soudage. Le rapport entre l'épaisseur cumulée des couches latérales et l'épaisseur de la lame est généralement compris entre 1 et 2.

Un tel élément de coupe est malheureusement peu utilisable pour percer des matériaux contenant du fer, du fait de la réactivité chimique du diamant. On sait par ailleurs que le nitrure de bore cubique, en abrégé CBN, à l'état de compact présente une stabilité chimique supérieure à celle du diamant en présence de fer. On a en conséquence déjà proposé d'utiliser des compacts de CBN en remplacement des compacts de diamants polycristallins chaque fois que l'on doit usiner un métal ferreux. Les compacts de CBN sont fabriqués en ajoutant au CBN un liant catalyseur. Parmi ces liants catalyseurs, un mélange de silicium élémentaire et de matériaux d'apport de carbone et d'aluminium est particulièrement favorable (EP-A-0 181 258).

Si l'on essaie de substituer un compact de CBN a un compact de diamant dans un élément de coupe plat ayant des couches latérales de carbure de tungstène, on se heurte à des problèmes. Si on lie directement la couche de carbure à la lame, le liant contenu dans le carbure diffuse lors du frittage vers la couche abrasive et le CBN de l'élément de coupe final n'est plus thermostable. Si, pour empêcher cette diffusion, on prévoit des couches intermédiaires, c'est-à-dire si on adopte une constitution du genre décrit dans le document EP-A-0 180 243 pour les éléments de coupe contenant du diamant, on augmente l'épaisseur à un point tel que l'élément de coupe plat devient difficilement utilisable.

On a également proposé de monter une lame de coupe en CBN sur un support par l'intermédiaire d'une couche de molybdène (JP-A-60 263 601 et JP-A-60 263 602) dans des conditions de durée, de pression et de température qui ne semblent pas suffisantes pour provoquer la formation d'un compact.

En conséquence, l'invention propose un élément de coupe plat de nature composite pour foret, comprenant une lame abrasive centrale ayant une teneur supérieure à 80 % en volume de matériau ultra-dur prise en sandwich entre deux couches latérales de support, le rapport entre l'épaisseur cumulée des couches latérales et l'épaisseur de la lame étant compris entre 1 et 2, caractérisé en ce que le matériau ultra-dur de la lame est essentiellement du CBN à l'état de compact, et en ce que les parties latérales sont en un métal ou alliage réfractaire choisi dans le groupe constitué par le tungstène, le titane et leurs alliages et présentent une liaison métallurgique et éventuellement chimique avec la lame.

Le tungstène permet d'obtenir, peut-être du fait de la porosité due à son mode d'élaboration, un accrochage du CBN bien meilleur que le molybdène.

Une transition peut être assurée en prévoyant des zones d'interface de faible épaisseur contenant à la fois le métal ou alliage réfractaire et du CBN. Pour améliorer la résistance du compact, ce dernier peut être fabriqué de façon à être constitué essentiellement de grains de CBN présentant une liaison intergranulaire dans un liant de nature céramique, constitué de carbure et de borure de silicium et d'aluminium, à peu près dépourvu d'aluminium et de silicium libres. Ces borures et carbures sont obtenus en ajoutant au produit de formation du compact de CBN, lors de la fabrication, du silicium sous forme élémentaire ou d'alliage, un matériau d'apport de carbone et un matériau d'apport d'aluminium (le matériau d'apport de carbone pouvant être du carbone élémentaire, par exemple sous forme de poudre de diamant et le matériau d'apport d'aluminium pouvant être l'aluminium lui-même).

L'invention propose également un procédé de fabrication d'un élément de coupe du type ci-dessus défini suivant lequel on place successivement, sur le fond d'une coupelle, une couche du métal ou alliage réfractaire à l'état de poudre ou de feuillard, une couche de poudre de CBN et de liant catalyseur, le CBN représentant 80 % en volume au moins de l'ensemble CBN-liant, et une nouvelle couche du métal ou alliage réfractaire à l'état de poudre ou de feuillard ; on scelle la coupelle et on soumet l'ensemble constitué par la coupelle et l'empilement qu'elle contient à des conditions de température et de pression auxquelles le CBN est dans un état thermodynamique stable pendant un temps suffisant pour assurer le frittage et la liaison intergranulaire des grains de CBN dans le compact.

Une durée de maintien à température et pression élevées de 3 à 30 mn sera généralement satisfaisante ; la pression élevée doit être maintenue pendant la montée et la descente en température.

Le liant catalyseur peut être sous forme pulvérulente et être mélangé au CBN pulvérulent ; il peut être également amené sous forme d'un disque mince fritté placé au contact direct de la couche de poudre de CBN.

On obtient ainsi finalement un disque de matériau sandwich qui peut être découpé ou par électro-érosion, lorsque le liant catalyseur utilisé conduit à un produit qui se prête à ce genre de découpe, ou au laser pour lui donner une forme appropriée, par exemple en toit ou pentagonale, suivant le type de foret sur lequel l'élément doit être monté.

Pour renforcer la liaison entre CBN et métal réfractaire, on intercale avantageusement, entre la couche de CBN et les couches de métal réfractaire, une pellicule mince d'un métal susceptible de réagir chimiquement avec les deux composants et de diminuer ainsi les contraintes d'interface. Lorsque le métal réfractaire est du tungstène, le métal susceptible de réagir peut notamment être du titane.

L'invention sera mieux comprise à la lecture de la description qui suit de modes particuliers de réalisation, donnés à titre d'exemples non limitatifs. La description se réfère aux dessins qui l'accompagnent, où l'échelle n'est pas respectée pour plus de clarté. Dans les dessins :
- la figure 1 est une vue en perspective d'un élément de coupe sandwich suivant un premier mode de réalisation de l'invention, ayant une partie centrale constituée d'un compact de CBN et des couches latérales de support en tungstène ;
- la figure 2 montre schématiquement l'empilement dans une coupelle des composants devant donner naissance à un élément de coupe suivant la figure 1, avant passage en presse ;
- la figure 3 montre un mode possible de montage de l'élément de la figure 1 sur la partie terminale d'un foret ;
- la figure 4 est une vue de dessus d'un élément de coupe similaire à celui de la figure 1 mais comportant une pellicule d'interface en un métal additionnel donnant naissance à des combinaisons chimiques ;
- la figure 5, similaire à la figure 4, montre un élément de coupe comportant une couche intermédiaire d'interface contenant à la fois du tunstène et du CBN ;
- la figure 6, similaire à la figure 3, est une vue en élévation, montrant un montage d'un élément de coupe de forme pentagonale suivant l'invention sur un foret ne comportant pas de goujure.

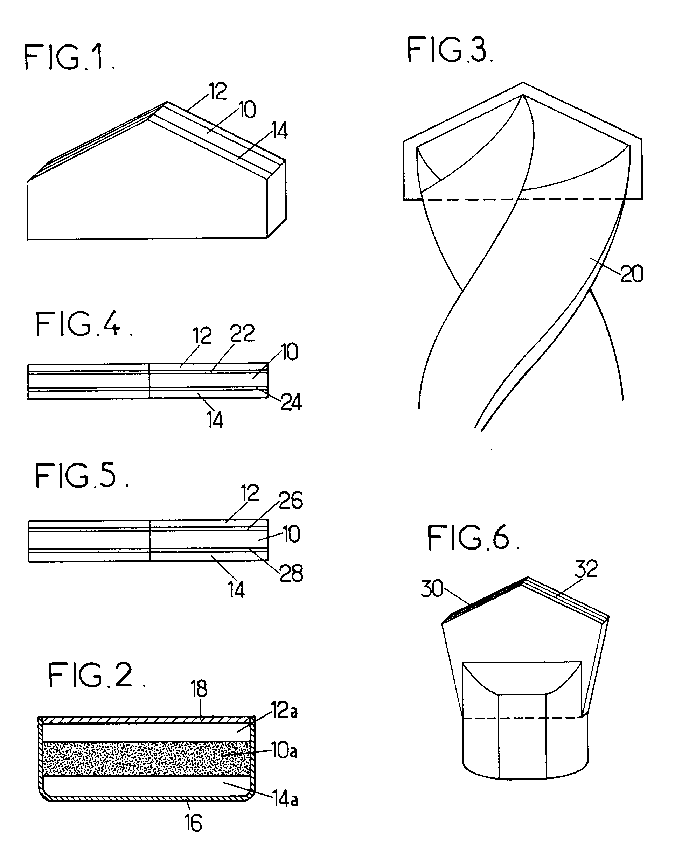

Un élément de coupe suivant l'invention aura fréquemment une forme en toit, du genre montré schématiquement en figure 1 : l'élément comporte une partie centrale 10 en forme de lame, constituée par un compact de CBN dont l'épaisseur sera généralement comprise entre 0,4 et 1,0 mm, suivant la dimension en plan de l'élément de coupe. Cette lame 10 est encadrée par des couches latérales 12 et 14 ayant une liaison métallurgique avec la lame 10, en métal ou alliage réfractaire, généralement de même épaisseur. Le rapport entre l'épaisseur cumulée des couches latérales et l'épaisseur de la lame sera généralement compris entre 1 et 2.

Pour constituer un tel élément, on peut notamment placer dans une coupelle 16, généralement en molybdène (figure 2), une couche 14a destinée à donner naissance à une des couches de métal réfractaire, à l'état de poudre ou de feuillard, puis une couche pulvérulente 10a destinée à donner naissance à la lame et une couche 12a identique à la couche 14a. On ferme la coupelle 16 à l'aide d'une contre-coupelle 18 et l'ensemble ainsi constitué est amené à la presse dans un milieu capable de transmettre la chaleur et la pression où la coupelle est soumise à des pressions supérieures à 4,5 MPa (45 kbars), et une température qui dépasse 1400°C. On obtient ainsi un disque composite métal réfractaire-CBN-métal réfractaire à partir duquel on peut obtenir, par découpe au laser ou par électro- érosion, des éléments ayant la forme montrée en figure 1 ou d'autres formes.

On donnera maintenant des exemples de réalisation particuliers, à titre non limitatif.

### Exemple 1

Pour constituer des éléments du genre montré en figure 1, on place deux disques de tungstène métallique 14a et 12a de 21 mm de diamètre de part et d'autre d'une couche 10a de poudre de CBN ayant une granulométrie comprise entre 1 et 30 µm, additionnée d'aluminium, de silicium et de diamant dans des proportions qui sont celles données dans le document EP-A-0 181 258, le pourcentage en volume de CBN étant d'au moins 85 %. Des essais ont été effectués notamment avec des disques de tungstène de 0,5 mm d'épaisseur encadrant une couche à 85 % de CBN ayant 0,7 mm d'épaisseur. Par passage à la presse pendant une durée de 8 mn, à une pression de 5,5 MPa (55 kbars) qui est maintenue pendant un cycle de température comprenant un chauffage jusqu'à 1550°C, un maintien à cette température pendant 6 mn, puis une décroissance de température jusqu'à l'ambiante, on a obtenu un disque composite. Des éléments du genre montré en figure 1 ont ensuite été découpés par laser dans ce disque.

Les éléments de coupe ainsi obtenus peuvent être fixés sur une tige de foret 20 présentant deux lèvres hélicoïdales et une fente terminale de réception de l'élément de coupe. La fixation peut être par brasage reliant les couches latérales de tungstène à l'acier de la tige du foret et la mise en forme de l'arête de coupe peut être effectuée par affutage (figure 3).

### Exemple 2

Comme indiqué plus haut, il est avantageux de renforcer la liaison entre CBN et métal réfractaire par interposition d'une interface de métal susceptible de réagir chimiquement avec les autres composants. Dans le cas montré en figure 4, cet interface est constitué par des pellicules minces 22 et 24 obtenues de la façon suivante : lors de la formation de l'empilement dans la coupelle de la figure 2, on dépose, par exemple par PVD, une fine pellicule de titane sur le tungstène à chaque interface tungstène/CBN. La couche a une épaisseur inférieure à 25 µm et n'augmente donc pas sensiblement l'épaisseur totale de l'élément de coupe. Lorsque l'empilement est porté à haute pression et haute température, le titane des pellicules 22 et 24 réagit avec le bore, l'azote et le tungstène pour former divers composés. Les produits de ces réactions chimiques renforcent l'interface. Le titane améliore la liaison chimique créée entre la lame centrale et les couches latérales et accomode les dilatations thermiques différentielles du CBN et du tungstène. Le renforcement de la liaison et l'accomodation des dilatations différentielles permettent de plus d'obtenir une meilleure planéité que dans le cas de l'exemple 1.

### Exemple 3

L'élément de coupe montré en figure 5 se différencie essentiellement du précédent en ce que des couches intermédiaires 26 et 28 constituées de CBN et de tungstène sont interposées entre la lame 10 et les couches latérales 12 et 14. Pour cela, au cours de l'empilage dans la coupelle 16 on dispose par exemple une couche intermédiaire de 100 µm d'épaisseur, constituée de CBN et de poudre de tungstène en proportions volumiques égales, de part et d'autre de la couche 10a. Par ce procédé, on accroît encore la solidité de l'interface CBN/W, par accomodation des contraintes dues au frittage.

### Exemple 4

Un élément de coupe identique à celui montré schématiquement en figure 1 a été obtenu en remplaçant les disques de tungstène par des disques de titane pour constituer les couches latérales 12 et 14. Deux disques de titane métallique ayant chacun une épaisseur de 0,5 mm ont été placés de chaque côté de la couche 10a de poudre de CBN, additionnée de liant catalyseur. La poudre de CBN avait encore une granulométrie comprise entre 1 et 30 µm. Les conditions de température et de pression appliquées étaient les mêmes que dans le cas de l'exemple 1.

### Exemple 5

Pour constituer un élément de coupe ayant la constitution en sandwich montrée en figure 1, on a apporté dans une coupelle les éléments constitutifs du compact de CBN de la lame 10, sous forme d'une couche de poudre de CBN pur et de diamant et d'une couche compactée mince de poudre d'aluminium, surmoulée d'une couche compactée mince de silicium placées entre disque de titane et poudre de CBN.

### Exemples 6 et 7

Les mêmes conditions opératoires que dans l'exemple 1 ont été reproduites, mais en utilisant comme liant catalyseur, d'une part, de l'aluminium seul (exemple 6), d'autre part, de l'aluminium et des composés de titane (exemple 7). On a obtenu ainsi des éléments de coupe utilisables, mais avec des caractéristiques légèrement moins favorables, du fait de l'absence du silicium.

### Exemple 8

Les mêmes conditions opératoires que dans le cas de l'exemple 5 ont été adoptées, mais en utilisant uniquement de l'aluminium comme liant catalyseur : on constate encore une légère dégradation des propriétés finales due à l'absence du silicium.

L'invention permet de réaliser des éléments de coupe ayant des formes très diverses. En particulier, elle permet de constituer des éléments de coupe de forme pentagonale du genre montré en figure 6, fréquemment utilisés pour équiper la tête de forets plats. La fixation peut encore être obtenue par brasage et/ou par coincement.

Par ailleurs, il n'est pas indispensable que la lame centrale en compact de CBN occupe toute la section droite de l'élément de coupe : il est possible de constituer des éléments dans lesquels seules les lèvres de coupe (arêtes 30 et 32 sur la figure 6) et une partie des lèvres latérales comportent une lame centrale en compact de CBN.

## Revendications

1. Elément de coupe plat de nature composite pour foret, comprenant une lame abrasive centrale ayant une teneur supérieure à 80 % en volume de matériau ultra-dur prise en sandwich entre deux couches latérales de support (12, 14), le rapport entre l'épaisseur cumulée des couches latérales et l'épaisseur de la lame étant compris entre 1 et 2, **caractérisé en ce que** le matériau ultra-dur de la lame est essentiellement du CBN et en ce que les parties latérales sont en un métal réfractaire choisi dans le groupe constitué par le tungstène et le titane, isolément ou sous forme d'alliage, et présentent une liaison métallurgique et éventuellement chimique avec la lame.

2. Elément selon la revendication 1, caractérisé en ce que le compact est constitué essentiellement de grains de CBN présentant une liaison intergranulaire dans un liant de nature céramique, constitué de carbure et de borure de silicium et d'aluminium, à peu près dépourvu d'aluminium et de silicium libres.

3. Elément selon la revendication 1 ou 2, caractérisé en ce qu'il comporte des zone d'interface de faible épaisseur contenant à la fois le métal ou alliage réfractaire et du CBN.

4. Procédé de fabrication d'élément de coupe sandwich, caractérisé en ce qu'on place successivement, sur le fond d'une coupelle, une couche de métal réfractaire choisi parmi le tungstène, le titane et leurs alliages, à l'état de poudre ou de feuillard, une couche de poudre de CBN et de liant catalyseur, le CBN représentant 80 % en volume au moins de l'ensemble CBN-liant, et une nouvelle couche du métal réfractaire à l'état de poudre ou de feuillard; on scelle la coupelle et on soumet l'ensemble constitué par la coupelle et l'empilement qu'elle contient à des conditions de température et de pression auxquelles le CBN est dans un état thermodynamique stable, pendant un temps suffisant pour assurer le frittage et la liaison intergranulaire des grains de CBN dans le compact.

5. Procédé selon la revendication 4, caractérisé en ce qu'on intercale, entre la couche de CBN (10) et chaque couche (12, 14) de métal réfractaire, une pellicule mince d'un métal (22, 24) susceptible de réagir chimiquement avec les deux composants.

6. Procédé selon la revendication 5, caractérisé en ce que, le métal réfractaire étant du tungstène, le métal de la pellicule est du titane.

7. Procédé selon la revendication 4, 5 ou 6, caractérisé en ce que le liant catalytique est apporté sous forme de matériau d'apport d'aluminium.

8. Procédé selon la revendication 4, 5 ou 6, caractérisé en ce que le liant catalytique est apporté sous forme de silicium élémentaire et de matériau d'apport de carbone et d'aluminium.

## Claims

1. Composite flat cutting element for a drill, comprising a central abrading blade having a content higher than 80% vol. of a ultra-hard matter sandwiched between two lateral support layers (12,14), the ratio between the cumulative thicknesses of the lateral layers and the thicknesses of the blade being comprised between one and two,
characterized in that the ultra-hard matter of the blade is essentially CBN and in that the lateral layers are of a refractory metal selected from the group consisting of tungsten and titanium, separately or as an alloy, and have a metallurgical and possibly chemical bond with the blade.

2. Element according to claim 1,
characterized in that the compact substantially consists of CBN grains having a mutual intercrystalline bonding within a ceramic binder constituted of silicon and aluminium carbide and boride, substantially devoid of free aluminium and silicon.

3. Element according to claim 1 or 2,
characterized in that it comprises interface zones of low thickness containing both the refractory metal or alloy and CBN.

4. A method for manufacturing a cutting element having a sandwich structure,
characterized by the steps of: successively placing, on the bottom of a cup, a layer of a refractory metal selected from tungsten, titanium and alloys thereof, in powder of strip form, a layer of CBN grains and catalytic binder, the CBN being present in an amount of at least 80% vol. of the CBN-binder amount, and an additional layer of the refractory metal in powder of strip form; sealing the cup and subjecting the unit consisting of the cup and the stack therein to temperature and pressure conditions at which CBN is in stable thermodynamic condition, for a sufficient time to cause sintering and intercrystalline bonding of the CBN grains in the compact.

5. Method according to claim 4,
characterized by the step of placing, between the CBN layer (10) and each refractory metal layer (12,14), a thin film of a metal (22,24) apt to chemically react with both components.

6. Method according to claim 5,
characterized in that, the refractory metal being tungsten, the metal of the film is titanium.

7. Method according to claim 4, 5 or 6,
characterized in that the catalytic binder is brought as an aluminium supplying material.

8. Method according to claim 4, 5 or 6,
characterized in that the catalytic binder is brought as elementary silicon and a matter which supplies carbon and aluminium.

## Patentansprüche

1. Verbundschneidelement flacher Art für Bohrer mit einer abschleifenden zentralen Schneide mit einem Gehalt von Wenigstens 80 Vol.% ultraharten Materials, welches zwischen zwei seitlichen Stützschichten (12,14) sandwichartig angeordnet ist, wobei das Verhältnis zwischen der Gesamtdicke der beiden seitlichen Schichten und der Dicke der Schneide zwischen 1 und 2 liegt,
dadurch gekennzeichnet,
daß das ultraharte Material der Schneide im wesentlichen aus CBN besteht, und daß die seitlichen Bereiche aus einem schwer schmelzbaren Metall bestehen, das aus der durch Wolfram und Titan gebildeten Gruppe ausgewählt ist, isoliert oder in Form einer Verbindung, und eine metallurgische Verbindung und ggf. eine chemische Verbindung mit der Schneide bilden.

2. Element nach Anspruch 1,
dadurch gekennzeichnet,
daß das Kompakt im wesentlichen aus Körnern aus CBN besteht, welche eine zwischenkornartige Verbindung in einem Bindemittel keramischer Natur bilden, welches aus einer Kohlenstoffverbindung und Borsilizium und Aluminium, ein wenig frei von Aluminium und aus freiem Silizium gebildet ist.

3. Element nach Anspruch 1 oder 2,
dadurch gekennzeichnet,
daß es eine Zwischenflächenzone mit geringer Dicke aufweist, welche zugleich das Metall oder die schwer schmelzbare Verbindung und CBN enthält.

4. Verfahren zur Herstellung eines sandwichartigen Schneidelementes,
dadurch gekennzeichnet,
daß man nacheinander auf dem Boden einer Schale eine schwer schmelzbare Metallschicht, welche aus Wolfram, Titan und ihren Verbindungen ausgewählt ist und puderförmig oder bandförmig ist, eine Puderschicht aus CBN und ein Katalysator-Bindemittel, wobei das CBN wenigstens 80 Vol.% der Gesamtheit CBN-Bindemittel aufweist, und eine neue Schicht aus schwer schmelzbarem Metall in puderförmigen oder bandförmigem Zustand anordnet, daß man der aus der Schale und der in dieser enthaltenen Schichtung gebildeten Gesamtheit Temperatur- und Druckbedingungen unterzieht, bei welchen das CBN während einer ausreichend langen Zeit in einem thermodynamisch stabilen Zustand ist, um ein Sintern und eine zwischenkornartige Verbindung der Körner des CBN im Kompakt sicherzustellen.

5. Verfahren nach Anspruch 4,
dadurch gekennzeichnet,
daß man zwischen die Schicht aus CBN (19) und jede Schicht aus schwer schmelzbarem Metall (12,14) eine dünne Metallschicht (22,24) zwischenschiebt, welche chemisch mit den beiden Bestandteilen reagieren kann.

6. Verfahren nach Anspruch 5,
dadurch gekennzeichnet,
daß das schwer schmelzbare Metall Wolfram ist, und daß die dünne Metallschicht aus Titan besteht.

7. Verfahren nach Anspruch 4, 5 oder 6,
dadurch gekennzeichnet,
daß das Katalysator-Bindemittel in Form eines Einlagematerials aus Aluminium eingelagert wird.

8. Verfahren nach Anspruch 4, 5 oder 6,
dadurch gekennzeichnet,
daß das Katalysator-Bindemittel in Form elementaren Siliziums und eines Einlagematerials aus Kohlenstoff und Aluminium eingelagert wird.
